# EUROPÄISCHE PATENTSCHRIFT

(11) **EP 2 857 246 B1**
(45) Veröffentlichungstag und Bekanntmachung des Hinweises auf die Patenterteilung: **31.01.2018**
(21) Anmeldenummer: 14176275.7
(22) Anmeldetag: 09.07.2014
(51) Int. Cl.: B60K 17/28, B60W 30/188

(54) **Landwirtschaftliche Arbeitsmaschine**
Agricultural work machine
Machine agricole

(30) Priorität: 19.09.2013 DE 102013110315
(43) Veröffentlichungstag der Anmeldung: 08.04.2015
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Surmann, Sebastian, 33824 Werther (DE); Birkmann, Christian, 33775 Versmold (DE); Wendt, Timo, 33175 Bad Lippspringe (DE)
(74) Vertreter: Budach, Steffen

(56) Entgegenhaltungen:
- EP-A1- 0 967 107
- EP-A1- 1 439 337
- EP-A1- 1 683 407
- EP-A2- 1 798 096
- EP-A2- 2 226 213
- WO-A1-2011/060995
- DE-A1-102011 084 622

## Beschreibung

Die Erfindung betrifft eine landwirtschaftliche Arbeitsmaschine wie insbesondere einen Traktor gemäß dem Oberbegriff des Anspruchs 1.

Landwirtschaftliche Arbeitsmaschinen wie Traktoren sind mit einem Antriebsmotor ausgestattet, der unter anderem dazu nutzbar ist, ein an den Traktor anbaubares Arbeitsgerät anzutreiben. Aus der Praxis der Landtechnik sind vielfältige derartiger Arbeitsgeräte bekannt, wie beispielsweise Ballenpressen, Schwader, Wender, Ladewagen und dergleichen. Den genannten Arbeitsgeräten ist gemein, dass diese über einen Zapfwellenabtrieb der ziehenden Arbeitsmaschine (z.B. Traktor) antreibbar sind, d.h. die dem jeweils angebauten Arbeitsgerät zugeordneten Arbeits- und/oder Förderaggregate werden unter Nutzung einer Leistung des Antriebsmotors des Traktors betrieben.

Bei bekannten Zapfwellenkonzepten kann der Antriebsmotor beispielsweise über fixe Übersetzungen mit der Zapfwelle verbunden werden. Zur Erzielung einer für das Arbeitsgerät gewünschten Normdrehzahl der Zapfwelle muss der Antriebsmotor dann im Bereich seiner Nenndrehzahl betrieben werden. Folglich gibt die für den Arbeitsprozess vorgesehene Zapfwellendrehzahl die Drehzahl des Antriebsmotors vor.

Um bei Zapfwellenarbeiten mit geringem Leistungsbedarf mit abgesenkter Dieselmotordrehzahl zu arbeiten und auf diese Weise den Betriebspunkt im Motorkennfeld in Bereiche mit geringerem spezifischen Kraftstoffverbrauch zu verschieben, existieren Sparzapfwellen, sogenannte E-Zapfwellen, mit entsprechend angepasster Übersetzung. Abhängig vom jeweiligen Hersteller bzw. der jeweiligen Ausstattung werden bis zu vier Zapfwellengänge (z.B.: 540/540e/1000/1000e) realisiert. Diese lassen sich üblicherweise jedoch nicht unter Last wechseln, so dass die Sparzapfwellen bei Feldarbeiten mit nur zeitweise hohem Leistungsbedarf (z.B. Erntebetrieb mit Ballenpressen) gar nicht genutzt werden können.

Darüber hinaus führt das Anlaufen von Anbaugeräten mit hohen Trägheitsmomenten (z.B. Quaderballenpressen) und/oder Lastmomenten (z.B. Futtermischwagen) zu starken Belastungen beim Kupplungsvorgang, da aufgrund der fehlenden Lastschaltbarkeit häufig in einem Zapfwellengang mit einer geringen Übersetzung angefahren werden muss. Schon in den genannten Fällen ist es für einen Bediener schwierig, das Potential der Zapfwellengänge auszuschöpfen.

Aus der DE 10 2011 084 623 A1 ist ein Zapfwellengetriebe für eine landwirtschaftliche Arbeitsmaschine bekannt. Bei diesem sind eine Getriebeantriebswelle sowie zwei damit kuppelbare Eingangswellen koaxial auf einer Achse angeordnet, um über verschiedene wählbare Getriebegangstufen, die jeweils durch eine Stirnradpaarung gebildet werden, eine dazu versetzte Zapfwelle antreiben zu können. Das so beschriebene Zapfwellengetriebe ist zumindest teilweise (jeweils bei Wechsel der Eingangswelle) unter Last schaltbar. WO 2011/060995 A1 und EP 1 683 407 A1 offenbaren landwirtschaftliche Arbeitsmaschinen, die die im Oberbegriff des Anspruchs 1 genannten Merkmale aufweisen.

Es zeigt sich, dass in der Praxis Lösungen bekannt sind, landwirtschaftliche Arbeitsmaschinen mit einem Zapfwellengetriebe veränderlicher Übersetzung auszustatten. Unabhängig von der Art des Getriebes, insbesondere unabhängig davon, ob das Getriebe unter Last oder lastfrei schaltbar ist, stellt die Möglichkeit der veränderlichen Übersetzung des Zapfwellengetriebes für den Bediener der Arbeitsmaschine jedoch eine zusätzlich zu bewältigende Aufgabe dar, die erst mit gewisser Sachkenntnis über die Wirkzusammenhänge zwischen den beteiligten Komponenten der Arbeitsmaschine und dem angebauten Arbeitsgerät vorteilhaft nutzbar ist.

Es ist eine Aufgabe der vorliegenden Erfindung, eine landwirtschaftliche Arbeitsmaschine der genannten Art anzugeben, die den Bediener bei Einsatz des Zapfwellengetriebes entlastet und mit der sich theoretisch erzielbare Vorteile eines Zapfwellengetriebes auch praktisch in stärkerem Maße nutzen lassen.

Die Aufgabe wird gelöst durch eine Arbeitsmaschine mit den Merkmalen des Anspruchs 1.

Der Erfindungsidee liegt zunächst die Erkenntnis zugrunde, dass die Zapfwelle der Arbeitsmaschine sinnvoll mit einer dem jeweiligen Einsatzzweck angepassten Drehzahl zu betreiben ist. Eine dem jeweiligen Einsatzzweck angepasste Drehzahl ermöglicht beispielsweise, dass ein Arbeitsprozess in gewünschter Qualität und/oder mit einer möglichst hohen Effizienz durchgeführt werden kann. Erfindungsgemäß ist daneben erkannt worden, dass es für einen Bediener der Arbeitsmaschine schon aufgrund der Vielzahl übriger zu überwachender Vorgänge während eines Arbeitseinsatzes eine Herausforderung ist, die Zapfwellendrehzahl dem jeweiligen Einsatzzweck anzupassen. Unter anderem ist eine laufende manuelle Anpassung der Drehzahl schwierig durchzuführen, da die Zapfwellendrehzahl aus Zusammenwirkung von Antriebsmotordrehzahl und eingestellter Übersetzung des Zapfwellengetriebes resultiert. Mit Änderung einer dieser Größen ändert sich auch die Zapfwellendrehzahl.

Erfindungsgemäß wurde eine vorteilhafte Lösung darin gesehen, dass die Übersetzung des Zapfwellengetriebes in Abhängigkeit von zumindest einem Betriebsparameter der Arbeitsmaschine und/oder des Arbeitsgeräts einstellbar ist. Anstatt dass der Maschinenbediener auf manuellem Wege versucht eine gewünschte Zapfwellendrehzahl einzustellen, erfolgt dies demnach durch selbsttätige Einstellung (Regelung) der Übersetzung des Zapfwellengetriebes unter Berücksichtigung eines oder mehrerer Betriebsparameter.

Zur Erzielung der genannten Wirkung ist der Arbeitsmaschine erfindungsgemäß eine Steuereinheit zugeordnet, die betreibbar ist, das Zapfwellengetriebe zur Einstellung einer Übersetzung unter Berücksichtigung des zumindest einen Betriebsparameters anzusteuern. Es kann sich dabei um jedwede Art von Steuereinrichtung handeln, die geeignet ist, das Zapfwellengetriebe zum Zweck der Einstellung einer Übersetzung anzusteuern. Unter anderem ist es denkbar, dass die Steuereinrichtung mit anderen Steuer- oder Regeleinrichtungen der Arbeitsmaschine und/oder des angebauten Arbeitsgeräts zusammenwirkt und/oder Teil von diesen ist.

In konstruktiver Hinsicht handelt es sich bei dem Zapfwellengetriebe vorzugsweise um ein schaltbares Getriebe. Schaltgetriebe sind verhältnismäßig günstig in der Herstellung und weisen bei geringem Wartungsaufwand eine hohe Zuverlässigkeit auf. Zudem lassen sich damit - insbesondere im Vergleich zu stufenlos in der Übersetzung veränderlichen Getrieben - besonders hohe Wirkungsgrade bei der Leistungsübertragung erzielen. Bevorzugt ist das schaltbare Zapfwellengetriebe als Lastschaltgetriebe oder Synchrongetriebe ausgeführt. Im ersten Fall ist vorteilhaft ein Gangwechsel auch unter Last möglich. Ein Synchrongetriebe weist dazu im Vergleich eine einfachere Bauart auf und ist damit zu geringeren Kosten herstellbar. Ein Schalten bei laufender Zapfwelle lässt sich mit einem Synchrongetriebe zumindest dann durchführen, wenn das angebaute Arbeitsgerät bei verhältnismäßig niedrigem Lastmoment ein verhältnismäßig hohes Trägheitsmoment aufweist. Die Zapfwelle läuft dann nämlich während einer durch den Gangwechsel bedingten kurzzeitigen Unterbrechung der Antriebsverbindung nahezu unverändert weiter. Dies ist beispielsweise beim unbelasteten Anlaufen einer Quaderballenpresse der Fall.

Insbesondere wenn das Zapfwellengetriebe als schaltbares Getriebe ausgeführt ist, kann eine vorteilhafte Weiterbildung der Erfindung darin bestehen, dass die Steuereinheit betreibbar ist, die Drehzahl der Zapfwelle zumindest annähernd stufenlos zu verändern, indem die Übersetzung des Zapfwellengetriebes und eine Drehzahl des das Zapfwellengetriebe antreibenden Antriebsmotors in Abhängigkeit voneinander geregelt werden. Die Steuereinheit sorgt in diesem Fall also für eine kombinierte Ansteuerung von Zapfwellengetriebe und Antriebsmotor. Insbesondere kann eine Maßnahme darin bestehen, dass bei einem Gangwechsel die Drehzahl des Antriebsmotors derart verändert wird, dass eine vor dem Gangwechsel vorliegende Drehzahl der Zapfwelle annähernd aufrechterhalten wird. Die durch den Gangwechsel vorgenommene Änderung der Übersetzung des Zapfwellengetriebes wird somit durch eine veränderte Eingangsdrehzahl in das Zapfwellengetriebe, nämlich durch die veränderte Drehzahl des Antriebsmotors, ausgeglichen. Durch das kombinierte Ansteuern von Zapfwellengetriebe und Antriebsmotor lässt sich die Zapfwellendrehzahl auch über Gangwechsel hinweg vorteilhaft annähernd stufenlos verändern, so dass sich ein an die Arbeitsmaschine angebautes Arbeitsgerät auf diese Weise besonders sanft und damit schonend in Bezug auf die beteiligten Komponenten des Antriebsstrangs beschleunigen (oder verzögern) lässt. Bei geeigneter Abstufung des Zapfwellengetriebes und entsprechender Ansteuerung des Antriebsmotors lässt sich für das Beschleunigen ein Konstantleistungsbereich des Antriebsmotors nutzen.

Grundsätzlich ist es denkbar, dass in einem entsprechenden manuellen Betriebsmodus die Übersetzung des Zapfwellengetriebes von einem Maschinenbediener frei wählbar ist. Gemäß einer vorteilhaften Weiterbildung der Erfindung ist jedoch der zumindest eine Betriebsparameter Teil einer von einem Bediener vorgebbaren, insbesondere auswählbaren und/oder konfigurierbaren Steuerstrategie, wonach die Übersetzung des Zapfwellengetriebes unter Berücksichtigung einer in der Steuerstrategie festlegbaren Zielsetzung automatisch ermittelt wird. Eine solche Steuerstrategie kann unterschiedlicher Art sein. Insbesondere dient in diesem Zusammenhang die Steuerstrategie dem Zweck, ein vorgegebenes Ziel unter der Berücksichtigung eines oder insbesondere mehrerer miteinander verknüpfter Betriebsparameter zu verfolgen. Dabei können unterschiedlichste Betriebsparameter der Arbeitsmaschine und/oder des angebauten Arbeitsgeräts berücksichtigt werden.

Bei einem zur Steuerung der Übersetzung des Zapfwellengetriebes zu berücksichtigenden Betriebsparameter der Arbeitsmaschine handelt es sich insbesondere um: eine Drehzahl des Antriebsmotors, eine Auslastung des Antriebsmotors, einen Verbrauch des Antriebsmotors, einen Schlupf an einer Kupplung des Zapfwellenantriebs, einen Systemwirkungsgrad (Wirkungsgrad der Antriebe der Arbeitsmaschine insgesamt, wie insbesondere: Antriebsmotor, Fahrantrieb, Zapfwellenantrieb, hydraulische Verbraucher, elektrische Verbraucher), allgemein einen Betriebsparameter des Fahrreglers (insbesondere: Fahrgeschwindigkeit, Fahrgetriebeübersetzung) und/oder einen Betriebsparameter eines übergeordneten Steuerungssystems der Arbeitsmaschine.

Bei einem zur Steuerung der Übersetzung des Zapfwellengetriebes zu berücksichtigenden Betriebsparameter des Arbeitsgeräts handelt es sich insbesondere um eine Information über das Arbeitsgerät selbst (Bauart, erforderliche Antriebsdrehzahl, maximales Drehmoment) und/oder über den mit dem Arbeitsgerät durchgeführten Arbeitsprozess (Durchsatz, Erntegutfeuchte, Fruchtart, Hangneigung, sonstige Erntebedingungen, gemessene Belastungen einzelner Arbeitsaggregate und dergleichen). Weitere Betriebsparameter sind denkbar, die bei der Wahl der Übersetzung des Zapfwellengetriebes in Betracht gezogen werden könnten.

Zuvor ist als vorteilhaft erwähnt worden, dass der zumindest eine Betriebsparameter Teil einer Steuerstrategie sein kann. Eine Steuerstrategie in diesem Sinne kann beispielsweise eine Vermeidung kritischer Betriebszustände beinhalten. Dies lässt sich insbesondere erreichen, indem ein Überschreiten einer jeweils zulässigen Belastung einer oder mehrerer Komponenten innerhalb des Antriebsstrangs von Arbeitsmaschine und/oder Arbeitsgerät verhindert wird. Beispielsweise handelt es sich bei einer derartigen Komponente um den Antriebsmotor. In diesem Fall beinhaltet die Steuerstrategie somit zum Beispiel eine Überwachung, ob nach einem Gangwechsel ein stabiler Zustand des Antriebsmotors vorliegt. Auf diese Weise lässt sich vorteilhaft vermeiden, dass der Antriebsmotor aufgrund einer zu hohen Drehmomentbelastung zum Stillstand ("Abwürgen") gezwungen wird oder dass ein Gangwechsel durchgeführt wird, der wiederum einen korrigierenden Gangwechsel erforderlich macht. Erfindungsgemäß ist weiterhin die Steuereinheit betreibbar, die Übersetzung des Zapfwellengetriebes gemeinsam mit einer Drehzahl des Antriebsmotors so zu regeln, dass der Systemwirkungsgrad maximiert wird. Die Regelung zielt drauf ab, dass der Antriebsmotor unter Erreichung einer vorgebbaren Drehzahl der Zapfwelle im Bereich eines niedrigen spezifischen Kraftstoffverbrauchs betrieben wird. Insbesondere bei Zapfwellenarbeiten mit geringem Leistungsbedarf lässt sich beispielsweise mit einer abgesenkten Dieselmotordrehzahl arbeiten und auf diese Weise der Betriebspunkt im Motorkennfeld in Bereiche mit geringerem spezifischen Kraftstoffverbrauch verschieben. Eine entsprechend gesteuerte Wahl von Drehzahl des Antriebsmotors und Übersetzung des Zapfwellengetriebes ermöglichen auf vorteilhafte Weise einen wirtschaftlichen Betrieb bei Erreichen einer gewünschten Zapfwellendrehzahl.

Eine vorteilhafte Weiterbildung der Erfindung sieht vor, dass die Steuereinheit in einem Anlaufmodus betreibbar ist, die noch im Stillstand befindliche Zapfwelle zunächst mit einer hohen Übersetzung des Zapfwellengetriebes zu starten, um anschließend durch einmaliges oder wiederholtes Schalten des Zapfwellengetriebes in niedrigere Übersetzungen eine vorgebbare Zielübersetzung zu erreichen. Auf diese Weise kann ein selbsttätiges Anlaufen der Zapfwelle unter Nutzung vorhandener Übersetzungen des Zapfwellengetriebes erfolgen, so dass der Maschinenbediener von dieser Tätigkeit entlastet ist. Zweckmäßigerweise wird im Rahmen dieses Anlaufvorgangs nicht nur die Übersetzung des Zapfwellengetriebes, sondern auch die Drehzahl des Antriebsmotors selbsttätig angepasst. Der Ablauf kann dabei auf unterschiedliche Weise optimiert sein.

Vorteilhaft erfolgt der Anlaufmodus unter Berücksichtigung eines vorgebbaren Kriteriums wie beispielsweise einer Zeitvorgabe (Zeit innerhalb derer eine Zielübersetzung oder -drehzahl erreicht wird). Auch ist es denkbar, dass als Kriterium eine schonende Betriebsweise vorgegeben wird, um den Verschleiß an Komponenten des Antriebsstrangs von Arbeitsmaschine und/oder Arbeitsgerät gering zu halten.

Die Antriebsleistung der Zapfwelle wird vom Antriebsmotor der Arbeitsmaschine bereitgestellt. Der Antriebsmotor ist üblicherweise jedoch auch in andere Antriebsvorgänge der Arbeitsmaschine eingebunden. Die Wahl der Übersetzung des Zapfwellengetriebes steht damit zumindest indirekt auch in Wechselwirkung zu anderen Antriebsvorgängen der Arbeitsmaschine. Auch auf andere Weise kann die gewählte Übersetzung des Zapfwellengetriebes Einfluss auf sonstige Vorgänge an der Arbeitsmaschine und/oder dem angebauten Arbeitsgerät haben. Daher wird gemäß einer bevorzugten Weiterbildung der Erfindung eine Information über die Übersetzung des Zapfwellengetriebes bei einem weiteren Steuerungs- und/oder Regelungsprozess der Arbeitsmaschine und/oder des Arbeitsgeräts berücksichtigt, um zumindest eine weitere Maschineneinstellung an der Arbeitsmaschine und/oder dem anbaubaren Arbeitsgerät zu beeinflussen. Dies kann im Rahmen eines übergeordneten Steuerungssystems und/oder eines Fahrreglers der Arbeitsmaschine erfolgen.

Auf besonders vorteilhafte Weise ist ein an der Arbeitsmaschine vorgesehener Fahrregler betreibbar, in Abhängigkeit der Übersetzung des Zapfwellengetriebes Komponenten des Fahrantriebs wie insbesondere den Antriebsmotor und/oder ein Fahrgetriebe anzusteuern. Damit könnten beispielsweise während vorgenommener Schaltvorgänge des Zapfwellengetriebes (Änderung der Übersetzung) die Drehzahl und/oder Leistung des Antriebsmotors und eine Übersetzung des Fahrgetriebes so angepasst werden (z.B. stufenlos), dass eine gewünschte Fahrgeschwindigkeit aufrechterhalten wird. Ein bedarfsweises Beschleunigen oder Verzögern (z.B. in Bestandslücken, um Antriebsenergie zu sparen) der Zapfwelle bei etwa konstanter Fahrgeschwindigkeit der Arbeitsmaschine ist damit vorteilhaft möglich.

Die Erfindung wird nachfolgend anhand eines in einer Figur gezeigten Ausführungsbeispiels näher erläutert. Daraus ergeben sich auch weitere vorteilhafte Wirkungen der Erfindung.

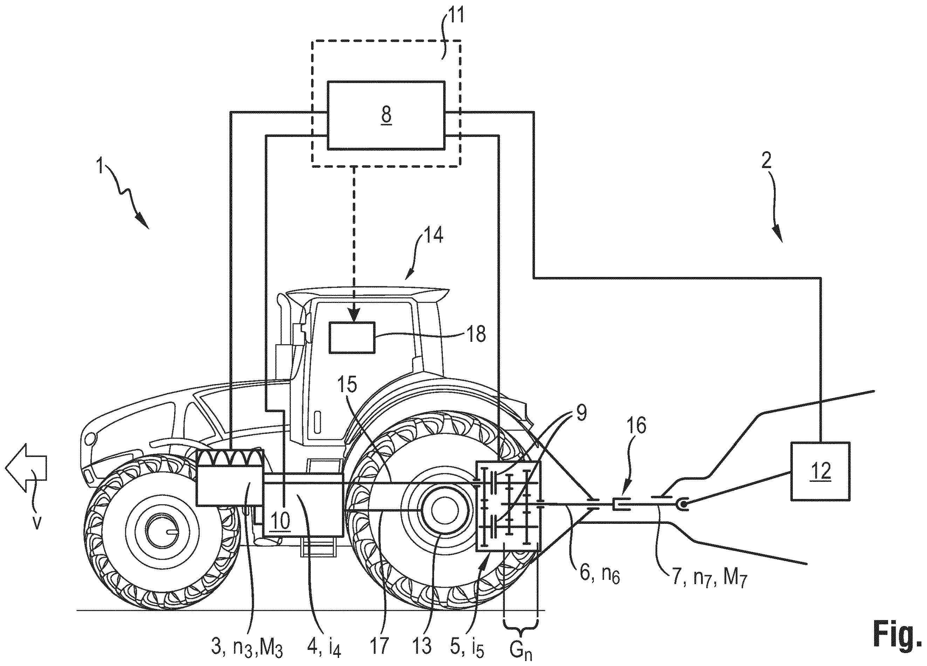

In der Zeichnung zeigt die einzige
- Fig.: einen Traktor mit angebautem Arbeitsgerät in schematischer Ansicht von der Seite.

Die einzige Fig. zeigt eine landwirtschaftliche Arbeitsmaschine in Form eines Traktors 1 in schematischer Ansicht von der Seite. An den Traktor 1 ist ein nur teilweise dargestelltes Arbeitsgerät angebaut, bei dem es sich beispielsweise um eine Quaderballenpresse 2 handelt. In vergleichbarer Weise kann den an Traktor 1 ein anderes Arbeitsgerät angebaut sein.

Der Traktor 1 weist frontseitig einen Antriebsmotor 3 auf, bei dem es sich beispielsweise um einen Dieselmotor handelt. Im Betrieb stellt der Antriebsmotor 3 eine Antriebsleistung bereit, die zum Antrieb verschiedener Aggregate des Traktors 1 zur Verfügung steht. Unter anderem ist die Antriebsleistung des Antriebsmotors 3 für einen Fahrantrieb sowie für einen Zapfwellenantrieb nutzbar.

Der Antriebsmotor 3 ist zu diesem Zweck (über eine nicht gezeigte Kupplung) mit einem Fahrgetriebe 4 in Antriebsverbindung bringbar, das wiederum über eine Welle 17 mit einer Hinterachse 13 des Traktors 1 antriebsverbunden ist, um den Traktor 1 beispielsweise in einer durch den vor dem Traktor 1 gezeichneten Richtungspfeil angezeigten Vorwärtsrichtung v in Fahrt zu setzen. Auf für sich gesehen bekannte und daher hier nicht näher zu erläuternde Weise lässt sich das Fahrgetriebe 4 mit unterschiedlicher Übersetzung i₄ betreiben, so dass eine Abtriebsdrehzahl n₃ des Antriebsmotors 3 abhängig von der gewählten Übersetzung i₄ des Fahrgetriebes 4 in unterschiedlichen Vorschub an der Hinterachse 13 - und somit in eine unterschiedliche Fahrgeschwindigkeit v des Traktors 1 - umgesetzt wird.

Das Fahrgetriebe 4 kann unterschiedlicher Bauart sein. Bevorzugt handelt es sich dabei um ein Getriebe, dessen Übersetzung i₄ stufenlos veränderlich ist. Dem Fahrgetriebe 4 ist ein Fahrregler 10 zugeordnet, der sowohl mit dem Fahrgetriebe 4 als auch mit dem Antriebsmotor 3 signalverbunden ist. Der Fahrregler 10 sorgt durch Ansteuerung des Antriebsmotors 3 und des Fahrgetriebes 4 dafür, dass der Traktor 1 eine beispielsweise von einem Bediener vorgegebene Fahrgeschwindigkeit v erreicht. Dazu werden vom Fahrregler 10 insbesondere eine Drehzahl i₃ des Antriebsmotors 3 sowie eine Übersetzung i₄ des Fahrgetriebes 4 vorgegeben. Zur Bedienung des Fahrreglers 10 kann eine Schnittstelle dienen, wie beispielsweise ein in der Fahrerkabine 14 angeordneter Schieberegler.

Der Antriebsmotor 3 treibt daneben über eine Welle 15 ein hinter der Hinterachse 13 angeordnetes Zapfwellengetriebe 5 an. Bei dem Zapfwellengetriebe 5 handelt es sich im gezeigten Ausführungsbeispiel um ein unter Last schaltbares Getriebe. Wie der vereinfachten Darstellung des Getriebes 5 zu entnehmen, ist dieses beispielsweise in Doppelkupplungsbauweise ausgeführt. Mit Hilfe von zwei Kupplungen 9 und zwei parallelen Teilgetriebezweigen, die jeweils zwei schaltbare Getriebegangstufen Gₙ aufweisen und auf eine gemeinsame Zapfwelle 6 abtreiben, lässt sich das Zapfwellengetriebe 5 in vier Getriebegangstufen Gₙ schalten. Das Zapfwellengetriebe 5 weist damit eine in vier Stufen veränderliche Übersetzung i₅ zwischen der Welle 15 (=Getriebeeingang) und der Zapfwelle 6 (=Getriebeausgang) auf. Die Anzahl von vier Übersetzungsstufen ist im Zusammenhand der Erfindung als beispielhaft anzusehen. Eine andere Anzahl von Getriebegangstufen Gₙ und/oder überhaupt eine andere Bauart eines Schaltgetriebes sind denkbar.

Abtriebsseitig tritt aus dem Zapfwellengetriebe 5 die Zapfwelle 6 aus, die heckseitig über eine formschlüssige Steckkupplung 16 mit einer Antriebswelle 7 der Quaderballenpresse 2 antriebsverbunden ist. Die Antriebswelle 7 überträgt die von der Zapfwelle 6 übertragene Antriebsleistung an beispielhaft ein Arbeitsaggregat 12 der Quaderballenpresse 2. Es kann sich statt nur eines Arbeitsaggregats 12 gleichsam um eine Vielzahl von Arbeitsaggregaten handeln, die auf diese Weise über die Zapfwelle 6 des Traktors 1 angetrieben werden.

Bei einer konstanten Drehzahl n₃ des Antriebsmotors 3 lässt sich die Drehzahl n₆ der Zapfwelle 6 - und damit die Antriebsdrehzahl n₇ der Ballenpresse 2 - dadurch beeinflussen, dass an dem Zapfwellengetriebe 5 die Übersetzung i₅ verändert wird. Da ein Bediener des Traktors 1 im Rahmen eines Arbeitseinsatzes vielfältige Vorgänge gleichzeitig zu beobachten hat, stellt die geschaffene Möglichkeit der veränderlichen Übersetzung des Zapfwellengetriebes für ihn eine zusätzlich zu bewältigende Aufgabe dar. Diese zusätzliche Aufgabe erfordert eine Sachkenntnis über die Wirkzusammenhänge zwischen den beteiligten Komponenten des Traktors 1 und der Ballenpresse 2. Zur Entlastung des Bedieners und um insbesondere einen effizienten Einsatz des Traktors 1 zu ermöglichen, ist die Übersetzung i₅ des Zapfwellengetriebes 5 in Abhängigkeit von zumindest einem Betriebsparameter des Traktors 1 und/oder der Ballenpresse 2 einstellbar.

Zu diesem Zweck ist dem Traktor 1 eine Steuereinheit 8 zugeordnet, welche bevorzugt eine elektronische Signalverarbeitungseinrichtung umfasst. Die Steuereinheit 8 steht in Signalverbindung mit dem Antriebsmotor 3, dem Fahrregler 10, dem Zapfwellengetriebe 5 sowie mit dem Arbeitsaggregat 12 der Ballenpresse 2. Es ist denkbar, dass die Steuereinheit 8 mit weiteren Einrichtungen, insbesondere Aktoren oder Sensoren des Traktors 1 und/oder der Quaderballenpresse 2 in Signalverbindung steht. Insbesondere zur Kommunikation mit der Quaderballenpresse 2 bzw. deren Einrichtungen kommt dabei bevorzugt ein Datenbussystem (z.B. ISOBUS) zum Einsatz.

Die Steuereinheit 8 ist betreibbar, das Zapfwellengetriebe 5 zur Einstellung einer Übersetzung i₅ unter Berücksichtigung zumindest eines Betriebsparameters anzusteuern. Damit sind verschiedene Funktionalitäten denkbar.

Die Steuereinheit 8 kann beispielsweise dazu genutzt werden, die Drehzahl n₆ der Zapfwelle 6 zumindest annähernd stufenlos zu verändern. Dazu werden insbesondere die Übersetzung i₅ des Zapfwellengetriebes 5 und die Drehzahl n₃ des Antriebsmotors 3 in Abhängigkeit voneinander geregelt. Die Steuereinheit 8 bewirkt somit eine kombinierte Ansteuerung von Zapfwellengetriebe 5 und Antriebsmotor 3. Bei einem Gangwechsel wird die Drehzahl n₃ des Antriebsmotors 3 derart verändert, dass eine vor dem Gangwechsel vorliegende Drehzahl n₆ der Zapfwelle 6 annähernd aufrechterhalten wird. Die durch den Gangwechsel vorgenommene Änderung der Übersetzung i₅ des Zapfwellengetriebes 5 wird somit durch eine veränderte Eingangsdrehzahl in das Zapfwellengetriebe 5, nämlich durch die veränderte Drehzahl n₃ des Antriebsmotors 3 ausgeglichen. Durch das kombinierte Ansteuern von Zapfwellengetriebe 5 und Antriebsmotor 3 lässt sich die Zapfwellendrehzahl n₆ somit auch über Gangwechsel hinweg annähernd stufenlos verändern. Dies bewirkt vorteilhaft, dass sich das Arbeitsaggregat 12 der Ballenpresse 2 besonders sanft und somit schonend beschleunigen (oder verzögern) lässt. Bei geeigneter Abstufung des Zapfwellengetriebes 5 und entsprechender Ansteuerung des Antriebsmotors 3 lässt sich für das Beschleunigen vorteilhaft ein Konstantleistungsbereich des Antriebsmotors 3 nutzen.

Bei Verwendung eines unter Last schaltbaren Zapfwellengetriebes 5 lässt sich die Zapfwellendrehzahl n₆ bei gleichbleibender Leistung quasi stufenlos verändern, indem der Konstantleistungsbereich des Antriebsmotors 3 mehrfach ausgenutzt wird. Auf diese Weise kann die Antriebsdrehzahl n₇ des Arbeitsgeräts 2 während des Betriebs bedarfsgerecht angepasst werden.

Ganz allgemein kann es sich bei einem für die Wahl der Übersetzung i₃ relevanten Betriebsparameter des Traktors 1 beispielsweise handeln um eine Drehzahl n₃ des Antriebsmotors 3, eine Auslastung des Antriebsmotors 3, einen Verbrauch des Antriebsmotors 3, einen Schlupf an einer Kupplung des Zapfwellenantriebs, einen Wirkungsgrad eines Antriebsaggregats, einen Betriebsparameter des Fahrreglers 10 und/oder einen Betriebsparameter eines übergeordneten Steuerungssystems 11 des Traktors 1.

Bei einem für die Wahl der Übersetzung i₃ relevanten Betriebsparameter der Ballenpresse 2 kann es sich beispielsweise handeln um eine Information über die Ballenpresse 2 selbst und/oder über den mit der Ballenpresse 2 durchgeführten Arbeitsprozess.

Die Übersetzung i₅ des Zapfwellengetriebes 5 kann somit in Abhängigkeit unterschiedlicher Betriebsparameter gesteuert werden, wodurch sich auf unterschiedliche Weise ein Nutzen ergeben kann. Zur erleichterten Bedienung und Handhabung ist vorgesehen, dass der (oder die) Betriebsparameter Teil einer von einem Bediener vorgebbaren, insbesondere auswählbaren und/oder konfigurierbaren Steuerstrategie ist bzw. sind. Eine solche Steuerstrategie kann beispielsweise im Rahmen eines Datenverarbeitungsprogramms anwendbar gemacht werden, das auf einer Datenverarbeitungseinrichtung der Steuereinheit 8 ausführbar ist. Dabei beinhaltet eine Steuerstrategie insbesondere, dass die Übersetzung i₅ des Zapfwellengetriebes 5 unter Berücksichtigung einer in der Steuerstrategie festlegbaren Zielsetzung ermittelt wird.

Eine derartige Zielsetzung kann beispielsweise in einer besonders kraftstoffsparenden Betriebsweise des Traktors 1 bestehen. Bei Verfolgung dieser Strategie regelt die Steuereinheit 8 beispielsweise die Übersetzung i₅ des Zapfwellengetriebes 5 gemeinsam mit einer Drehzahl n₃ des Antriebsmotors 3 so, dass der Antriebsmotor 3 unter Erreichung einer vorgebbaren Drehzahl der Zapfwelle 6 im Bereich eines niedrigen spezifischen Kraftstoffverbrauchs betrieben wird.

Eine andere Steuerstrategie kann beispielsweise eine Vermeidung kritischer Betriebszustände beinhalten, was insbesondere dadurch erreicht werden kann, dass die Steuereinheit 8 ein Überschreiten einer jeweils zulässigen Belastung des Antriebsmotors 3 verhindert. Konkret lässt die Steuereinheit 8 einen Schaltvorgang bzw. allgemein eine verringerte Übersetzung i₅ des Zapfwellengetriebes 5 dabei nur dann zu, wenn sichergestellt ist, dass ein Drehmoment M₃ des Antriebsmotors 3 auch unter der verringerten Übersetzung i₅ noch ausreicht, um einen stabilen Fahrzustand zu gewährleisten, d.h. nicht unter der Last des Zapfwellenantriebs zum Stillstand zu gelangen.

Eine weitere vorteilhafte Anwendungsmöglichkeit besteht darin, dass die Steuereinheit 8 in einem Anlaufmodus betreibbar ist, die noch im Stillstand befindliche Zapfwelle 6 zunächst mit einer hohen Übersetzung i₅ des Zapfwellengetriebes 5 zu starten, um anschließend durch einmaliges oder wiederholtes Schalten des Zapfwellengetriebes 5 in niedrigere Übersetzungen i₅ eine vorgebbare Zielübersetzung i₅ zu erreichen. Die Steuereinheit 8 gibt dabei vorteilhaft eine Programmabfolge vor, welche eine selbsttätige Ansteuerung von Antriebsmotor 3, Zapfwellengetriebe 5 sowie beteiligter Kupplungen 9 beinhaltet. Der Bediener ist somit von der Durchführung und Überwachung des Schaltvorgangs entlastet.

Weiter bevorzugt erfolgt das Anlaufen der Zapfwelle 6 dabei unter Berücksichtigung eines durch den Bediener vorgebbaren Kriteriums. Beispielsweise kann vorgebbar sein, dass die Zapfwelle 6 innerhalb kürzest möglicher Zeit auf eine bestimmte Zieldrehzahl n₆ beschleunigt sein soll. Alternativ könnte vorgebbar sein, dass die Zapfwelle 6 mitsamt angebautem Arbeitsgerät 2 möglichst schonend in Bezug auf die beteiligten Komponenten des Antriebsstrangs auf eine bestimmte Zieldrehzahl n₆ beschleunigt werden soll.

Wie in der Fig. zeichnerisch angedeutet, ist die Steuereinheit 8 im beschriebenen Ausführungsbeispiel weiterhin Teil eines übergeordneten Maschinensteuerungssystems 11 und steht mit diesem in Informationsaustausch. Das Maschinensteuerungssystem 11 kann damit vorteilhaft dazu beitragen, dass bei der Wahl der Übersetzung i₅ unterschiedliche Betriebsparameter des Traktors 1 und/oder der Ballenpresse 2 berücksichtigt werden können. Das Maschinensteuerungssystem 11 einschließlich der Steuereinheit 8 ist vorzugsweise über ein in der Fahrerkabine 14 des Traktors 1 angeordnetes Bedienterminal 18 für einen Bediener der Traktors 1 zugänglich. Der Bediener kann an dem Bedienterminal 18 einerseits vielfältige Informationen über Betriebsparameter des Traktors 1 und der Ballenpresse 2 abrufen. Weiterhin kann der Bediener über das Bedienterminal 18 vielfältige Einstellungen vornehmen sowie Funktionen auslösen. Hierzu zählen neben den zuvor bereits beschriebenen Funktionen auch weitere Funktionen des Traktors 1, wie insbesondere Funktionen des Fahrreglers, Hydraulikfunktionen, Lenkfunktionen und dergleichen. Es kann weiterhin vorgesehen sein, dass auch Funktionen der Ballenpresse 2 darüber bedienbar sind. Über das Maschinensteuerungssystem 11 werden demnach vielfältige Steuerungs- und Regelungsvorgänge des Traktors 1 und vorzugsweise auch der Ballenpresse 2 koordiniert. Bedarfsweise kann das Maschinensteuerungssystem 11 dabei auch auf Informationen über die jeweils gewählte Übersetzung i₅ des Zapfwellengetriebes 5 zurückgreifen, um unter Berücksichtigung der Übersetzung i₅ weitere Maschineneinstellungen am Traktor 1 und/oder der Ballenpresse 2 zu beeinflussen. Beispielsweise kann vorgesehen sein, dass der Fahrregler 10 betreibbar ist, in Abhängigkeit der Übersetzung i₅ des Zapfwellengetriebes 5 Komponenten des Fahrantriebs wie insbesondere den Antriebsmotor 3 und/oder das Fahrgetriebe 4 anzusteuern.

### Bezugszeichenliste

- 1: Traktor
- 2: Quaderballenpresse
- 3: Antriebsmotor
- 4: Fahrgetriebe
- 5: Zapfwellengetriebe
- 6: Zapfwelle
- 7: Antriebswelle
- 8: Steuereinheit
- 9: Kupplung
- 10: Fahrregler
- 11: Maschinensteuerungssystem
- 12: Arbeitsaggregat
- 13: Hinterachse
- 14: Fahrerkabine
- 15: Welle
- 16: Steckkupplung
- 17: Welle
- 18: Bedienterminal

- Gₙ: Getriebegangstufe
- i₄: Übersetzung Fahrantrieb
- i₅: Übersetzung Zapfwellengetriebe
- M₃: Drehmoment Antriebsmotor
- M₇: Drehmoment Antriebswelle
- n₃: Drehzahl Antriebsmotor
- n₆: Drehzahl Zapfwelle
- n₇: Drehzahl Antriebswelle
- v: Fahrgeschwindigkeit

## Patentansprüche

1. Landwirtschaftliche Arbeitsmaschine, insbesondere Traktor (1), mit einem Antriebsmotor (3) und einem davon antreibbaren Zapfwellengetriebe (5) mit einer abtriebseitigen Zapfwelle (6) zum Antrieb eines an die Arbeitsmaschine (1) anbaubaren Arbeitsgeräts (2), wobei das Zapfwellengetriebe (5) eine veränderliche Übersetzung (i₅) aufweist, wobei die Übersetzung (i₅) des Zapfwellengetriebes (5) in Abhängigkeit von zumindest einem Betriebsparameter der Arbeitsmaschine (1) und/oder des Arbeitsgeräts (2) einstellbar ist, wobei eine Steuereinheit (8) vorgesehen ist, die derart ausgebildet und eingerichtet ist, das Zapfwellengetriebe (5) zur Einstellung einer Übersetzung (i5) unter Berücksichtigung des zumindest einen Betriebsparameters anzusteuern **dadurch gekennzeichnet, dass** die Steuereinheit (8) derart ausgebildet und eingerichtet ist, die Übersetzung (i5) des Zapfwellengetriebes (5) gemeinsam mit einer Drehzahl (n3) des Antriebsmotors (3) so zu regeln, dass der Systemwirkungsgrad der Arbeitsmaschine (1) maximiert wird, wobei der Antriebsmotor unter Erreichung einer vorgebbaren Drehzahl der Zapfwelle im Bereich eines niedrigen spezifischen Kraftstoffverbrauches betrieben wird.

2. Arbeitsmaschine nach Anspruch 1, **dadurch gekennzeichnet, dass** das Zapfwellengetriebe (5) als schaltbares Getriebe, insbesondere als Lastschaltgetriebe oder Synchrongetriebe ausgeführt ist.

3. Arbeitsmaschine nach Anspruch 1 oder 2, **dadurch gekennzeichnet, dass** die Steuereinheit (8) derart ausgebildet und eingerichtet ist, die Drehzahl (n₆) der Zapfwelle (6) zumindest annähernd stufenlos zu verändern, indem die Übersetzung (i₅) des Zapfwellengetriebes (5) und eine Drehzahl (n₃) des das Zapfwellengetriebe (5) antreibenden Antriebsmotors (3) in Abhängigkeit voneinander geregelt werden.

4. Arbeitsmaschine nach einem der vorigen Ansprüche, **dadurch gekennzeichnet, dass** der zumindest eine Betriebsparameter Teil einer von einem Bediener vorgebbaren, insbesondere auswählbaren und/oder konfigurierbaren Steuerstrategie ist, wonach die Übersetzung (i₅) des Zapfwellengetriebes (5) unter Berücksichtigung einer in der Steuerstrategie festlegbaren Zielsetzung ermittelt wird.

5. Arbeitsmaschine nach einem der vorigen Ansprüche, **dadurch gekennzeichnet, dass** es sich bei dem zumindest einen Betriebsparameter der Arbeitsmaschine (1) handelt um: eine Drehzahl (n₃) des Antriebsmotors (3), eine Auslastung des Antriebsmotors (3), einen Verbrauch des Antriebsmotors (3), einen Schlupf an einer Kupplung (9) des Zapfwellenantriebs, einen Systemwirkungsgrad der Arbeitsmaschine (1), einen Betriebsparameter des Fahrreglers (10) und/oder einen Betriebsparameter eines übergeordneten Steuerungssystems (11) der Arbeitsmaschine (1).

6. Arbeitsmaschine nach einem der vorigen Ansprüche, **dadurch gekennzeichnet, dass** es sich bei dem zumindest einen Betriebsparameter des Arbeitsgeräts (2) um eine Information über das Arbeitsgerät (2) selbst und/oder über den mit dem Arbeitsgerät (2) durchgeführten Arbeitsprozess handelt.

7. Arbeitsmaschine nach einem der Ansprüche 4 bis 6, **dadurch gekennzeichnet, dass** die Steuerstrategie eine Vermeidung kritischer Betriebszustände beinhaltet, insbesondere indem ein Überschreiten einer jeweils zulässigen Belastung einer oder mehrerer Komponenten (3) innerhalb des Antriebsstrangs von Arbeitsmaschine (1) und/oder Arbeitsgerät (2) verhindert wird.

8. Arbeitsmaschine nach einem der Ansprüche 1 bis 7, **dadurch gekennzeichnet, dass** die Steuereinheit (8) in einem Anlaufmodus derart ausgebildet und eingerichtet ist, die noch im Stillstand befindliche Zapfwelle (6) zunächst mit einer hohen Übersetzung (i₅) des Zapfwellengetriebes (5) zu starten, um anschließend durch einmaliges oder wiederholtes Schalten des Zapfwellengetriebes (5) in niedrigere Übersetzungen (i₅) eine vorgebbare Zielübersetzung (i₅) zu erreichen.

9. Arbeitsmaschine nach Anspruch 8, **dadurch gekennzeichnet, dass** der Anlaufmodus unter Berücksichtigung eines vorgebbaren Kriteriums erfolgt.

10. Arbeitsmaschine nach einem der vorigen Ansprüche, **dadurch gekennzeichnet, dass** eine Information über die Übersetzung (i₅) des Zapfwellengetriebes (5) bei einem weiteren Steuerungs- und/oder Regelungsprozess (11) der Arbeitsmaschine (1) und/oder des Arbeitsgeräts (2) berücksichtigt wird, um zumindest eine weitere Maschineneinstellung an der Arbeitsmaschine (1) und/oder dem anbaubaren Arbeitsgerät (2) zu beeinflussen.

11. Arbeitsmaschine nach einem der vorigen Ansprüche, **dadurch gekennzeichnet, dass** ein an der Arbeitsmaschine (1) vorgesehener Fahrregler (10) derart ausgebildet und eingerichtet ist, in Abhängigkeit der Übersetzung (i₅) des Zapfwellengetriebes (5) Komponenten des Fahrantriebs wie insbesondere den Antriebsmotor (3) und/oder das Fahrgetriebe (4) anzusteuern.

## Claims

1. An agricultural working machine, in particular a tractor (1), having a drive engine (3) and a power take-off transmission (5) drivable thereby and having a drive output power take-off shaft (6) for driving a working implement (2) which can be attached to the working machine (1), wherein the power take-off transmission (5) has a variable transmission ratio (i₅), wherein the transmission ratio (i₅) of the power take-off transmission (5) is adjustable in dependence on at least one operating parameter of the working machine (1) and/or the working implement (2), wherein there is provided a control unit (8) which is designed and adapted to actuate the power take-off transmission (5) for setting a transmission ratio (i₅) having regard to the at least one operating parameter, **characterised in that** the control unit (8) is designed and adapted to regulate the transmission ratio (i₅) of the power take-off transmission (5) jointly with a rotary speed (n₃) of the drive engine (3) in such a way that the system efficiency of the working machine (1) is maximised, wherein the drive engine is operated in the range of a low specific fuel consumption while achieving a predeterminable rotary speed of the power take-off shaft.

2. A working machine according to claim 1 **characterised in that** the power take-off transmission (5) is in the form of a shift transmission, in particular a power shift transmission or a synchronous transmission.

3. A working machine according to claim 1 or claim 2 **characterised in that** the control unit (8) is so designed and adapted to at least approximately steplessly change the rotary speed (n₆) of the power take-off shaft by the transmission ratio (i₅) of the power take-off transmission (5) and a rotary speed (n₃) of the drive engine (3) which drives the power take-off transmission (5) being regulated in dependence on each other.

4. A working machine according to one of the preceding claims **characterised in that** the at least one operating parameter is part of a control strategy which can be predetermined by an operator, in particular which can be selected and/or configured, in accordance with which the transmission ratio (i₅) of the power take-off transmission (5) is ascertained having regard to a target setting which can be established in the control strategy.

5. A working machine according to one of the preceding claims **characterised in that** the at least one operating parameter of the working machine (1) involves: a rotary speed (n₃) of the drive engine (3), a loading on the drive engine (3), a consumption of the drive engine (3), a slip at a clutch (9) of the power take-off drive, a system efficiency of the working machine (1), an operating parameter of the travel regulator (10) and/or an operating parameter of a higher-order control system (11) of the working machine (1).

6. A working machine according to one of the preceding claims **characterised in that** the at least one operating parameter of the working implement (2) involves information about the working implement (2) itself and/or about the working process being carried out by the working implement (2).

7. A working machine according to one of claims 4 to 6 **characterised in that** the control strategy involves avoidance of critical operating states, in particular by preventing a respectively admissible loading of one or more components (3) within the drive train of the working machine (1) and/or the working implement (2) from being exceeded.

8. A working machine according to one of claims 1 to 7 **characterised in that** the control unit (8) in a start-up mode is so designed and adapted to start the power take-off shaft (6) which is still in the stopped condition initially at a high transmission ratio (i₅) of the power take-off transmission (5) in order then to reach a predeterminable target transmission ratio (i₅) by one-off or repeated shifting of the power take-off transmission (5) to lower transmission ratios (i₅).

9. A working machine according to claim 8 **characterised in that** the start-up mode is implemented having regard to a predeterminable criterion.

10. A working machine according to one of the preceding claims **characterised in that** information about the transmission ratio (i₅) of the power take-off transmission (5) is taken into consideration in a further open-loop and/or closed-loop control process (11) of the working machine (1) and/or the working implement (2) to influence at least one further machine setting at the working machine (1) and/or the working implement (2) which can be attached.

11. A working machine according to one of the preceding claims **characterised in that** a travel regulator (10) provided on the working machine (1) is so designed and adapted to actuate components of the travel drive like in particular the drive engine (3) and/or the travel transmission (4) in dependence on the transmission ratio (i₅) of the power take-off transmission (5).

## Revendications

1. Machine de travail agricole, en particulier tracteur (1), comprenant un moteur d'entraînement (3) et une transmission de prise de force (5) entraînable par celui-ci, avec une prise de force côté sortie (6) pour entraîner un outil de travail (2) attelable à la machine de travail (1), la transmission de prise de force (5) présentant un rapport de multiplication variable (i₅), le rapport de multiplication (i₅) de la transmission de prise de force (5) étant réglable en fonction d'au moins un paramètre d'exploitation de la machine de travail (1) et/ou de l'outil de travail (2), une unité de commande (8) étant prévue, laquelle est conçue et agencée de façon à commander la transmission de prise de force (5) pour régler un rapport de multiplication (i₅) en tenant compte du au moins un paramètre d'exploitation, **caractérisée en ce que** l'unité de commande (8) est conçue et agencée pour réguler le rapport de multiplication (i₅) de la transmission de prise de force (5) conjointement avec une vitesse de rotation (n3) du moteur d'entraînement (3), de façon que le rendement système de la machine de travail (1) soit maximalisé, le moteur d'entraînement étant exploité en atteignant une vitesse de rotation prescriptible de la prise de force associée à une faible consommation de carburant spécifique.

2. Machine de travail selon la revendication 1, **caractérisée en ce que** la transmission de prise de force (5) est conformée en transmission à changement de rapport, en particulier en transmission commandée en charge ou en transmission synchronisée.

3. Machine de travail selon la revendication 1 ou 2, **caractérisée en ce que** l'unité de commande (8) est conçue et agencée de façon à faire varier la vitesse de rotation (n₆) de la prise de force de manière au moins approximativement progressive, par le fait que le rapport de multiplication (i₅) de la transmission de prise de force (5) et une vitesse de rotation (n₃) du moteur d'entraînement (3) entraînant la transmission de prise de force (5) sont régulés en fonction l'un de l'autre.

4. Machine de travail selon une des revendications précédentes, **caractérisée en ce que** le au moins un paramètre d'exploitation fait partie d'une stratégie de commande prescriptible, en particulier sélectionnable et/ou configurable par l'utilisateur, selon laquelle le rapport de multiplication (i₅) de la transmission de prise de force (5) est calculé en tenant compte d'un objectif à fixer dans la stratégie de commande.

5. Machine de travail selon une des revendications précédentes, **caractérisée en ce que** le au moins un paramètre d'exploitation de la machine de travail (1) est : une vitesse de rotation (n₃) du moteur d'entraînement (3), une charge du moteur d'entraînement (3), une consommation du moteur d'entraînement (3), un patinage au niveau d'un accouplement (9) de l'entraînement de prise de force, un rendement système de la machine de travail (1), un paramètre d'exploitation du régulateur de marche (10) et/ou un paramètre d'exploitation d'un système de commande supérieur (11) de la machine de travail (1).

6. Machine de travail selon une des revendications précédentes, **caractérisée en ce que** le au moins un paramètre d'exploitation de l'outil de travail (2) est une information sur l'outil de travail (2) lui-même et/ou sur le processus de travail effectué avec l'appareil de travail (2).

7. Machine de travail selon une des revendications 4 à 6, **caractérisée en ce que** la stratégie de commande consiste à éviter des états de fonctionnement critiques, en particulier en interdisant le dépassement d'une sollicitation autorisée d'un ou plusieurs composants (3) à l'intérieur de la chaîne de transmission de la machine de travail (1) et/ou de l'outil de travail (2).

8. Machine de travail selon une des revendications 1 à 7, **caractérisée en ce que** l'unité de commande (8) est conçue et agencée dans un mode de démarrage afin de lancer la prise de force (6), encore à l'arrêt, d'abord avec un rapport de multiplication élevé (i₅) de la transmission de prise de force (5) afin d'atteindre ensuite un rapport de multiplication cible prescriptible (i₅) par une commutation unique ou répétée de la transmission de prise de force (5) vers des rapports de multiplication inférieurs (i₅).

9. Machine de travail selon la revendication 8, **caractérisée en ce que** le mode de démarrage se déroule en tenant compte d'un critère prescriptible.

10. Machine de travail selon une des revendications précédentes, **caractérisée en ce qu'**une information sur le rapport de multiplication (i₅) de la transmission de prise de force (5) est prise en compte lors d'un processus ultérieur de commande et/ou de régulation (11) de la machine de travail (1) et/ou de l'outil de travail (2) afin d'influer sur au moins un réglage de machine ultérieur entrepris sur la machine de travail (1) et/ou sur l'outil de travail attelable (2).

11. Machine de travail selon une des revendications précédentes, **caractérisée en ce qu'**un régulateur de marche (10) prévu sur la machine de travail (1) est conçu et agencé pour commander des composants du groupe propulseur, comme en particulier le moteur d'entraînement (3) et/ou la boîte de vitesses (4), en fonction du rapport de multiplication (i₅) de la transmission de prise de force (5).
